Europäisches Patentamt

European Patent Office

Office européen des brevets

(11) Veröffentlichungsnummer: **0 251 300**
**A1**

## (12) EUROPÄISCHE PATENTANMELDUNG

(21) Anmeldenummer: 87109419.9

(51) Int. Cl.⁴: **E06B 3/96**

(22) Anmeldetag: 30.06.87

(30) Priorität: 01.07.86 DE 3622069

(43) Veröffentlichungstag der Anmeldung:
07.01.88 Patentblatt 88/01

(84) Benannte Vertragsstaaten:
AT DE ES FR GB SE

(71) Anmelder: Landau, Heinz
Kemptener Str 75
D-8958 Füssen(DE)

(72) Erfinder: Landau, Heinz
Kemptener Str 75
D-8958 Füssen(DE)

(74) Vertreter: Fehners, Klaus Friedrich, Dipl.-Ing.
Dipl.-Wirtsch.-Ing. et al
Patentanwälte Dipl.-Ing. A. Wedde Dipl.-Ing.
K. Empl Dipl.-Ing., Dipl.-Wirtsch.-Ing. K.
Fehners Schumannstrasse 2
D-8000 München 80(DE)

(54) Verbindungs-Zwischenstücke aus thermoplastischem Kunststoff für die Herstellung von festen Verbindungen zwischen Profilabschnitten, insbesondere Eckverbindungen von Fensterrahmenprofilen, sowie ein Verfahren zur Herstellung solcher Verbindungen.

(57) Es werden Verbindungs-Zwischenstücke (1 bzw. 2) aus thermoplastischem Kunststoff für die Herstellung von festen Verbindungen zwischen Profilabschnitten (15 bzw. 16) insbesondere Eckverbindungen von Fensterrahmenprofilen, geschaffen, wobei die Profilabschnitte (15 bzw. 16) massiv und/oder hohl sind, einen Überzug (19) aus dem gleichen Material wie die Verbindungs-Zwischenstücke (1 bzw. 2) aufweisen oder selbst vollständig aus diesem Material bestehen und die Verbindungs-Zwischenstücke (1 bzw. 2) als die Stirnflächen der Profilabschnitte vollständig abdeckende, den Konturen und Aussenabmessungen der Profilabschnitte angepasste Platten (3 bzw. 4) ausgebildet sind, wobei die Platten auf ihren, den Stirnflächen der Profilabschnitte zugekehrten Innenseiten mindestens einen, in Achsrichtung der Profilabschnitte verlaufenden Zapfen (13) aufweisen, welcher entweder in eine entsprechende Bohrung (14) in der Stirnfläche des Vollprofilabschnittes einsteht, oder als in die offenen Hohlprofilabschnitte einstehendes, den Konturen und Innenabmessungen des Hohlprofilabschnittes angepasstes Kernstück ausgebildet ist und wobei der Kunststoff-Überzug (19) bzw. die selbst aus dem Kunststoffmaterial bestehenden Profile mit einer äusseren Randschicht (18) über die Verbindungs-Zwischenstücke übersteht bzw. überstehen und die Aussenseiten (5 bzw. 6) der Platten (3 bzw. 4) Profilierungen aufweisen, wobei die Aussenseiten der Verbindungs-Zwischenstücke (1 bzw. 2) als im wesentlichen glatte Flächen ausgebildet sind und die Profilierungen singuläre Vor-und/oder Rücksprünge (7 bzw. 9) sind, wobei diese auf den einander zugekehrten aussenseiten der jeweils paarweise angeordneten Verbindungs-Zwischenstücke (1 bzw. 2) zueinander komplementär sind.

FIG. 3

EP 0 251 300 A1

## Verbindungs-Zwischenstücke aus thermoplastischem Kunststoff für die Herstellung von festen Verbindungen zwischen Profilabschnitten, insbesondere Eckverbindungen von Fensterrahmenprofilen, sowie ein Verfahren zur Herstellung solcher Verbindungen.

Die Erfindung betrifft Verbindungs-Zwischenstücke aus thermoplastischem Kunststoff für die Herstellung von festen Verbindungen zwischen Profilabschnitten gemäss Oberbegriff des Anspruches 1, weiterhin eine Eckverbindung von Fensterrahmenprofilen gemäss Oberbegriff des Anspruches 11 sowie ein Verfahren zur Herstellung von Verbindungen zwischen Profilabschnitten bzw. Eckverbindungen unter Verwendung von Verbindungs-Zwischenstücken gemäss Oberbegriff des Anspruches 12. Bei diesen bekannten Verbindungs-Zwischenstücken sind die Profilierungen auf den Aussenseiten als mehr oder weniger gleichmässig verteilte, sich teilweise kreuzende Stege gleicher Dicke und Höhe ausgebildet, wobei diese ergänzend von einem als Rand ausgebildeten, die übrigen Stege einschliessenden und die Verbindungs-Zwischenstücke vollständig umgebenden Steg eingefasst sind, welcher ebenfalls gleiche Dicke und Höhe aufweist. Hierbei entsprechen sich die Profilierungs-Anordnungen zweier gegeneinander gerichteter Verbindungs-Zwischenstücke spiegelbildlich.

Da die Kanten dieser Stege der jeweiligen Verbindungs-Zwischenstücke sämtlich in einer Schnittebene liegen, können diese Verbindungs-Zwischenstücke beim Zusammenführen zum Verschweissen nach Wegnahme der Heizplatte gegeneinander verschoben werden bzw. eine exakte, passgenaue Verschweissung kann durch leichtes Verschieben beim Gegeneinanderdrücken der Profilenden durch Scherkräfte verhindert werden.

Aufgabe der Erfindung ist es deshalb, Verbindungs-Zwischenstücke der eingangs genannten Art und damit hergestellte Eckverbindungen von Fensterrahmenprofilen und weiterhin ein Verfahren zur Herstellung von festen Verbindungen zwischen Profilabschnitten unter Verwendung solcher Verbindungs-Zwischenstücke zu schaffen, bei welchen insbesondere zwischen den Verbindungs-Zwischenstücken eine passgenaue Führung während des Verschweissungs-Vorganges gewährleistet ist.

Diese Aufgabe wird bei einem Verbindungs-Zwischenstück aus thermoplastischem Kunststoff der eingangs genannten Art dadurch gelöst, dass die Aussenseiten der Verbindungs-Zwischenstücke als im wesentlichen glatte Flächen ausgebildet sind und die Profilierungen singuläre Vor-und/oder Rücksprünge sind, wobei diese auf den einander zugekehrten Aussenseiten der jeweils paarweise angeordneten Verbindungs-Zwischenstücke zueinander komplementär sind.

Vorteilhaft sind sämtliche Vorsprünge auf dem ersten Verbindungs-Zwischenstück und sämtliche komplementären Rücksprünge in dem zweiten Verbindungs-Zwischenstück angeordnet.

Durch die vorgenannte Ausbildung der Profilierungen als einander angepasste und ineinander führ- bzw. steckbare Vor-und Rücksprünge wird vor allen Dingen eine Passgenauigkeit der aufeinander zugeführten Verbindungs-Zwischenstücke und damit auch der jeweiligen Profilabschnitte gewährleistet.

In erfindungsgemässer Weiterbildung ist die Länge der Vorsprünge grösser als die Tiefe der Rücksprünge.

Diese Ausbildung gewährleistet, das zusätzlich zur Führung der Verbindungs-Zwischenstücke eine Stauchung der Vorsprünge in den Rücksprüngen stattfindet und diese vollständig ausfüllen, da ja der Durchmesser der Vorsprünge kleiner gewählt werden muss als der Durchmesser der Rücksprünge, damit die Vorsprünge überhaupt beim Zusammenführen der Verbindungs-Zwischenstücke ohne Klemmungen etc. eingeführt werden können.

Erfindungsgemäss sind die Vorsprünge und Rücksprünge senkrecht zur Fläche der Aussenseite der jeweiligen Verbindungs-Zwischenstücke gerichtet.

Eine solche Anordung gewährleistet ein einfaches Zueinanderführen der Verbindungs-Zwischenstücke.

Erfindungsgemäss sind die Vorsprünge als zylindrische Zapfen und die Rücksprünge als komplementäre zylindrische Bohrungen mit radial erweiterten Bodenräumen ausgebildet.

Weitere vorteilhafte Ausbildungen der Vorsprünge und Rücksprünge sind den Ansprüchen 6.) bis 10.) zu entnehmen.

Gemeinsam ist diesem unterschiedlichen Ausbildungen der Vor-und Rücksprünge der Vorteil, dass durch die Stauchung der gegenüber der Tiefe der einzelnen Rücksprünge überlangen Vorsprünge die erweiterten Bodenräume der Rücksprünge ausgefüllt werden und nach Erstarren des thermoplastischen Kunststoffmaterials eine formschlüssige Verbindung geschaffen ist.

Bei Verwendung von Vollprofil-Abschnitten können die Rücksprünge und Ausnehmungen keinen geschlossenen Boden aufweisen, sondern nicht nur zur Aussen-sondern auch Innenseite der Platten offene Löcher sein.

Die weiter oben gestellte Aufgabe zur Schaffung einer Eckverbindung zweier, auf Gehrung geschnittener, jeweils mit einem Überzug aus thermoplastischem Kunststoff versehener Vollprofil-Abschnitte eines Fensterrahmens wird dadurch gelöst, dass die Profilierungen auf der Aussenseite des ersten Verbindungs-Zwischenstückes als Zapfen oder Stege ausgebildet sind und in auf der Aussenseite des zweiten Verbindungs-Zwischenstückes als komplementäre Bohrungen oder Schlitze ausgebildete Rücksprünge einstehen und die gestauchten Enden der Zapfen oder Stege die erweiterten Bodenräume der Bohrungen und Schlitze ausfüllen.

Eine solche Eckverbindung zeichnet sich durch die erfindungsgemässe Ausbildung insbesondere bezüglich einer gegenüber den vorbekannten Ausführungsformen erhöhten Steifigkeit und eines besseren Verwindungs-Widerstandes aus.

Die schliesslich noch gestellte Aufgabe zur Schaffung eines Verfahrens zur Herstellung von festen Verbindungen zwischen Abschnitten von Voll-oder Hohlprofilen, welche einen Überzug aus thermoplastischem Kunststoff aufweisen, wird dadurch gelöst, das zwischen die gegeneinander gerichteten Profilabschnitte mit den auf ihren Stirnflächen angeordneten Verbindungs-Zwischenstücken eine Heizplatte geführt wird, welche die über die Stirnflächen der Profilabschnitte bzw. jeweiligen Verbindungs-Zwischenstücke überstehenden Überzüge bzw. Randschichten wie die Profilierungen, welche als entsprechend lange Vorsprünge in Form von Zapfen und/oder Stegen auf dem ersten Verbindungs-Zwischenstück ausgebildet sind, und die Aussenseiten der Platten der Verbindungs-Zwischenstücke erwärmt, dass nach ausreichender Erwärmung die Heizplatte entfernt wird und die Profilabschnitte aufeinander zugeführt werden, wobei die Vorsprünge auf dem ersten Verbindungs-Zwischenstück in die Rücksprünge in dem zweiten Verbindungs-Zwischenstück eingeführt und die Profilabschnitte so weit gegeneinander gepresst werden, bis die Vorsprünge wegen ihrer grösseren Länge gegenüber der Tiefe der Rücksprünge in diesen gestaucht werden und die erweiterten Bodenräume der Rücksprünge ausfüllen. Dieses vorbeschriebene Verfahren bietet gegenüber den bekannten Verfahren den Vorteil, das eine exakte Führung der Profilabschnittsenden bzw. der auf ihren Stirnflächen angeordneten Verbindungs-Zwischenstücke gegeneinander gewährleistet ist. Gerade bei der Herstellung von auf Gehrung geschnittenen Eckverbindungen treten durch das Andrücken aus verschiedenen Richtungen gegeneinander Scherkräfte auf, welche ein Verschieben der Verbindungs-Zwischenstücke gegeneinander bewirken können. Ein solches Verschieben wird gerade durch die erfindungsgemäss vorgesehenen Vor-und Rücksprünge vermieden und durch die Stauchung der überlangen Vorsprünge in den erweiterten Bodenräumen der Rücksprünge ergibt sich zusätzlich eine auf Zug belastbare Verbindung.

Vorteilhaft weist die Heizplatte in ihrer, der die Vorsprünge aufwei senden Aussenseite des entsprechenden Verbindungs-Zwischenstückes gegenüberliegenden Oberfläche den Vorsprüngen angepaßte komplementäre Profilierungen in Form von Rücksprüngen bzw. Ausnehmungen oder Schlitzen auf und wird entsprechend geführt und/oder von einer bestimmten Seite aus in den Verbindungsspalt geführt. Hierdurch wird erreicht, das die gegenüber der Fläche der Aussenseite des Verbindungs-Zwischenstückes vorstehenden Vorsprünge sowie die Fläche der Aussenseite selbst gleichmässiger erwärmt wird.

Verschiedene Ausführungsbeispiele solcher Verbindungs-Zwischenstücke und Eckverbindungen von Profilabschnitten sind in den Zeichnungen dargestellt.

Es zeigen

Fig. 1 eine Ansicht der Aussenseite einer ersten Ausführungsform eines ersten Verbindungs-Zwischenstückes,

Fig. 1a eine Seitenansicht des Verbindungs-Zwischenstückes gemäss Fig. 1,

Fig. 2 eine Ansicht auf die Aussenseite einer ersten Ausführungsform eines zweiten Verbindungs-Zwischenstückes,

Fig. 2a einen Schnitt gemäss Linie IIa - IIa in Fig. 2,

Fig. 3 einen Schnitt durch eine Eckverbindung mit der ersten Ausführungsform der Verbindungs-Zwischenstücke und mit eingeführter Heizplatte,

Fig. 3a einen Schnitt durch eine fertige Verbindung gemäss Fig. 3,

Fig. 4 eine Ansicht der Aussenseite einer zweiten Ausführungsform eines ersten Verbindungs-Zwischenstückes,

Fig. 4a eine Seitenansicht des Verbindungs-Zwischenstückes gemäss Fig. 4,

Fig. 5 eine Ansicht auf die Aussenseite einer zweiten Ausführungsform eines zweiten Verbindungs-Zwischenstückes,

Fig. 5a einen Schnitt gemäss Linie Va - Va in Fig. 5,

Fig. 6 einen Schnitt durch eine Eckverbindung mit der zweiten Ausführungsform der Verbindungs-Zwischenstücke und mit eingeführter Heizplatte,

Fig. 6a einen Schnitt durch eine fertige Verbindung gemäss Fig. 6,

Fig. 7 eine Ansicht der Aussenseite einer dritten Ausführungsform eines ersten Verbindungs-Zwischenstückes,

Fig. 7a eine Seitenansicht des Verbindungs-Zwischenstückes gemäss Fig. 7,

Fig. 8 eine Ansicht auf die Aussenseite einer dritten Ausführungsform eines zweiten Verbindungs-Zwischenstückes,

Fig. 8a einen Schnitt gemäss Linie VIII - VIII in Fig. 8,

Fig. 9 einen Schnitt durch eine Eckverbindung mit der dritten Ausführungsform der Verbindungs-Zwischenstücke und mit eingeführter Heizplatte,

Fig. 9a einen Schnitt durch eine fertige Verbindung gemäss Fig. 9,

Fig. 10 eine Ansicht der Aussenseite einer vierten Ausführungsform eines ersten Verbindungs-Zwischenstückes,

Fig. 10a eine Seitenansicht des Verbindungs-Zwischenstückes gemäss Fig. 10,

Fig. 11 eine Ansicht auf die Aussenseite einer vierten Ausführungsform eines zweiten Verbindungs-Zwischenstückes,

Fig. 11a einen Schnitt gemäss Linie Xla - Xla in Fig. 11,

Fig. 12 einen Schnitt durch eine Eckverbindung mit der vierten Ausführungsform der Verbindungs-Zwischenstücke und mit eingeführter Heizplatte,

Fig. 12a einen Schnitt durch eine fertige Verbindung gemäss Fig. 12,

Fig. 13 eine Ansicht der Aussenseite einer fünften Ausführungsform eines ersten Verbindungs-Zwischenstückes,

Fig. 13a eine Seitenansicht des Verbindungs-Zwischenstückes gemäss Fig. 13,

Fig. 14 eine Ansicht auf die Aussenseite einer fünften Ausführungsform eines zweiten Verbindungs-Zwischenstückes,

Fig. 14a einen Schnitt gemäss Linie XIVa - XIVa in Fig. 14,

Fig. 15 einen Schnitt durch eine Eckverbindung mit der fünften Ausführungsform der Verbindungs-Zwischenstücke und mit eingeführter heizplatte,

Fig. 15a einen Schnitt durch eine fertige Verbindung gemäss Fig. 15,

Bei den nachfolgend beschriebenen Ausführungsformen der Verbindungs-Zwischenstücke weisen diese eine im wesentlichen rechteckige Form auf, entsprechend den ebenfalls dargestellten, miteinander zu verbindenden Profilabschnitten, Selbstverständlich können die Verbindungs-Zwischenstücke auch komplizierteren Querschnittsformen bzw. Konturen von Profilen angepasst sein.

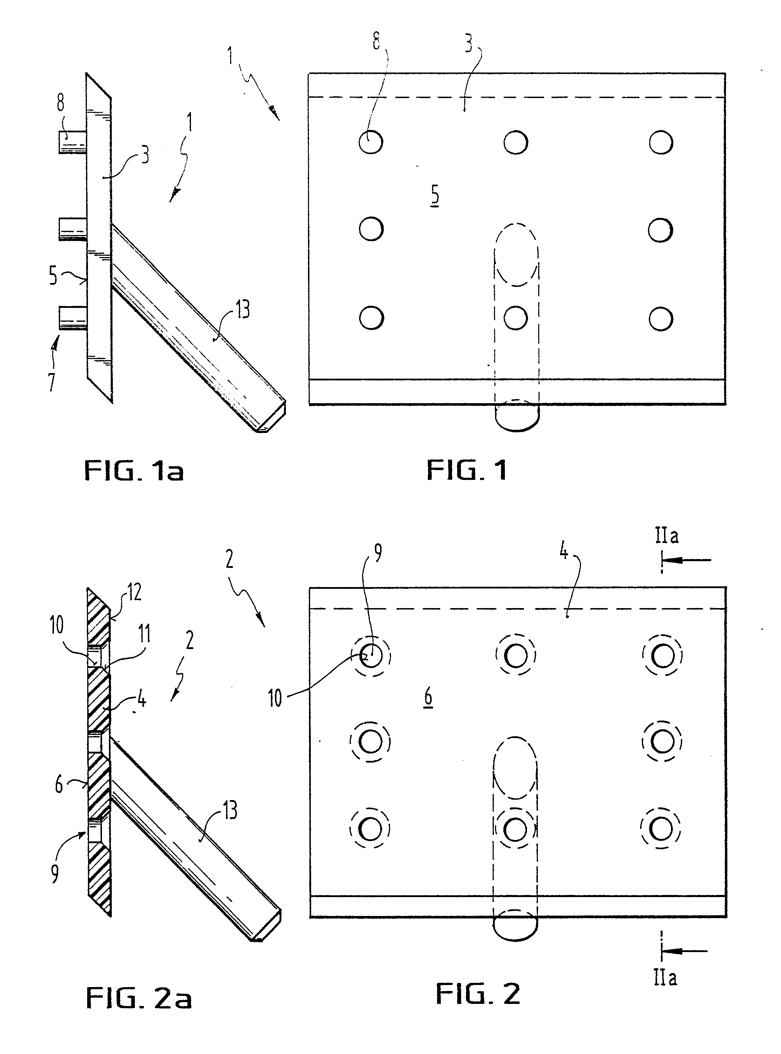

In den Figuren 1 bis 3a ist eine erste Ausführungsform der Verbindungs-Zwischenstücke dargestellt. Die jeweils paarweise zu verwendenden Verbindungs-Zwischenstücke, nämlich ein erstes Verbindungs-Zwischenstück 1 und ein zweites Verbindungs-Zwischenstück 2 bestehen im wesentlichen jeweils aus einer, der Querschnittsfläche eines Profilabschnittes entsprechenden und dessen Stirnfläche abdeckenden Platte 3 bzw. 4, welche jeweils glattflächige Aussenseiten 5 bzw. 6 aufweisen.

Auf der Aussenseite 5 des ersten Verbindungs-Zwischenstückes 1 ist eine bestimmte Anzahl singulärer Vorsprünge 7 in ebenfalls frei zu bestimmender Anordnung vorgesehen, welche jeweils als zylindrische Zapfen ausgebildet sind.

Entsprechend dieser vorgewählten Form der Anordnung dieser Zylindrischen Zapfen 8 sind in der Platte 4 des zweiten Verbindungs-Zwischenstückes 2 komplementäre Rücksprünge 9 in Form von zylindrischen Bohrungen 11 vorgesehen, deren Bodenraum 11 radial erweitert, insbesondere kegelstumpfförmig erweitert ist.

Die hier dargestellten Rücksprünge 9 wie auch die in den nachstehend beschriebenen Ausführungsbeispielen dargestellten Rücksprünge öffnen sich zu den jeweiligen Innenseiten, hier Innenseite 12, sind also offene Löcher.

Für den Fall, dass anstelle von Vollprofilen Hohlprofile miteinander verbunden werden sollen, sind anstelle der Zapfen 13, welche in entsprechende Bohrungen 14 der Vollprofile 15 bzw. 16 einstehen, den Konturen und Innenabmessungen eines Hohlprofilabschnittes angepasste, in den Figuren nicht dargestellte Kernstücke vorgesehen, deren Aussenseiten nahezu den Abmessungen der Platten, hier Platten 3 und 4, entsprechen. In einem solchen Ausführungsfalle weisen die Rücksprünge in dem dann zweiten Kernstück jeweils geschlossene Böden auf.

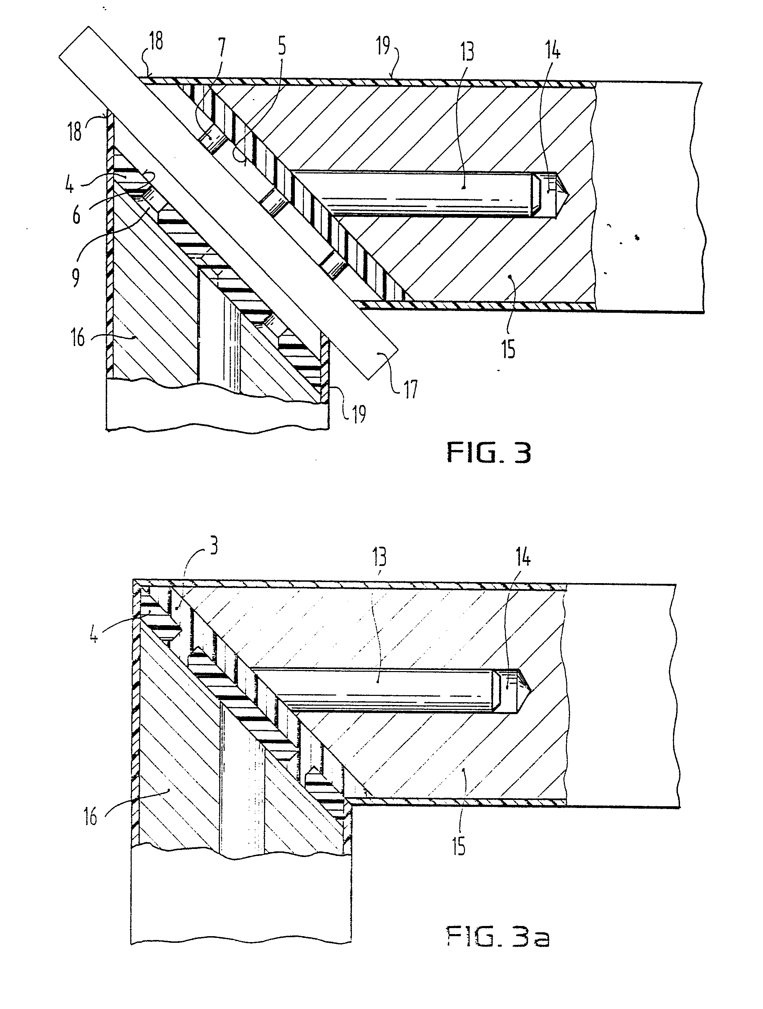

In den Fig. 3 und 3a sind die zu verbindenden bzw. verbundenen Vollprofile 15 und 16 dargestellt, welche auf Gehrung geschnitten sind und in vorgesehenen Bohrungen 14 mit ihren Zapfen 13 eingesetzte erste und zweite Verbindungs-Zwischenstücke 1 und 2 aufweisen.

In Fig. 3 ist eine Heizplatte 17 dargestellt, welche glattflächig ausgebildet sein, andererseits jedoch auch den Vorsprüngen 7 entsprechende Ansnehmungen aufweisen kann, und die Aussenseite 5 und die Vorsprünge 7 des ersten Verbindungs-Zwischenstückes 1 sowie die Aussenseite 6 des zweiten Verbindungs-Zwischenstückes 2 erwärmt.

Gleichzeitig werden auch die überstehenden Enden 18 des thermoplasti schen Kunststoff-Überzuges 19 der jeweiligen Vollprofilabschnitte 15 bzw. 16 mit erwärmt.

Nach Entfernung der Heizplatte 17 werden die Profilabschnitte 15 und 16 gegeneinander geführt und gepresst, wobei die Vorsprünge 7 in die Rücksprünge 9 eingeführt werden. Da die Vorsprünge 7 gegenüber der Tiefe der Rücksprünge 9 eine Überlänge aufweisen, werden diese gestaucht und füllen die erweiterten Bodenräume 11 der Rücksprünge 9 aus. Gleichzeitig verbinden sich die erwärmten überstehenden Enden 18 des Überzuges 19. Eine feste Verbindung zwischen den ersten und zweiten Verbindungs-Zwischenstücken und damit den Profilabschnitten 15 bzw. 16 ist hergestellt.

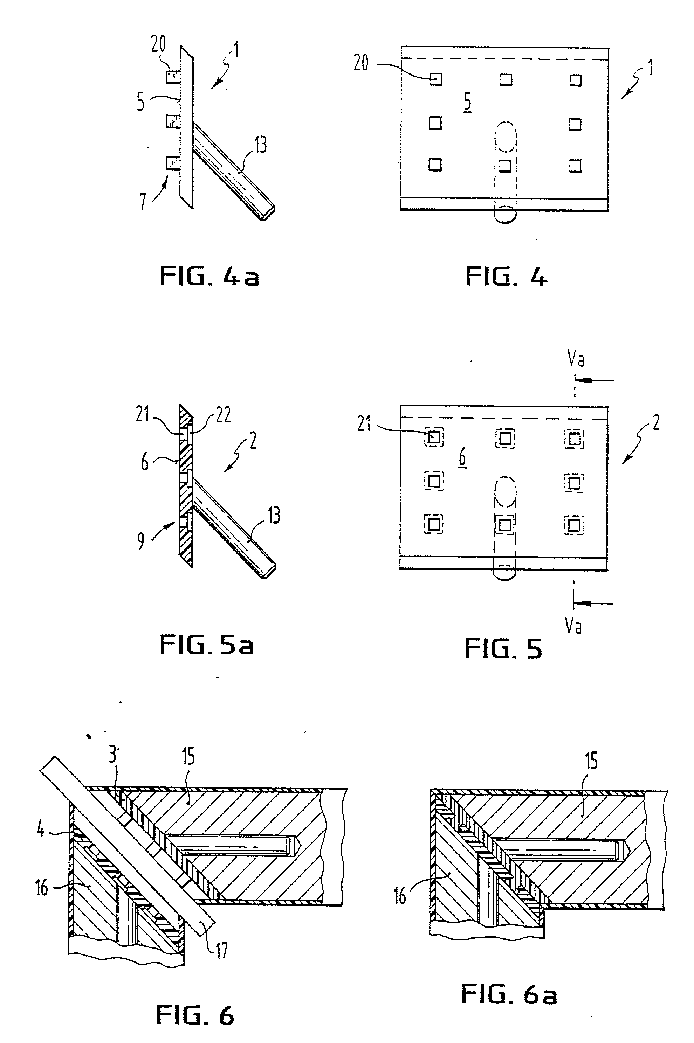

Bei der in den Figuren 4 - 6a dargestellten zweiten Ausführungsform der ersten und zweiten Verbindings-Zwischenstücke 1 bzw. 2 sind die Vor- und Rücksprünge 7 bzw. 9 als im Querschnitt rechteckige, insbesondere quadratische, Zapfen 21 und als im Querschnitt rechteckige, insbesondere quadratische, Vertiefungen 21 ausgebildet, deren erweiterter Bodenraum 22 ebenfalls im Querschnitt rechteckig, insbesondere quadratisch ist.

Im übrigen entsprechen die Verbindungs-Zwischenstücke 1 bzw. 2 und die in den Figuren 6 und 6a dargestellten Verbindungen der Volprofile 15 der vorbeschriebenen ersten Ausführungsform.

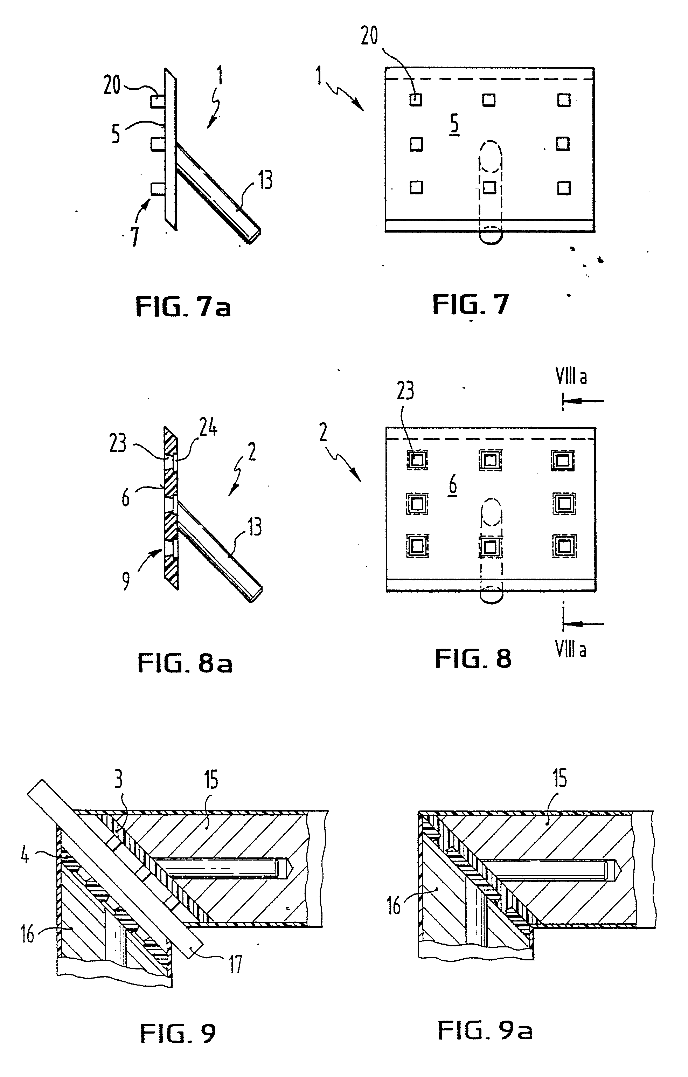

Eine dritte Ausführungsform der Vor-und Rücksprünge 7 bzw. 9 der Verbindungs-Zwischenstücke 1 bzw. 2 ist in den Figuren 7 - 9a dargestellt.

Die Vorsprünge 7 sind wie bei dem zweiten Ausführungsbeispiel als rechteckige Zapfen 20 ausgebildet, die Rücksprünge 9 dagegen in dem zweiten Verbindungs-Zwischenstück 2 als im Längsschnitt trichterförmige, sich von der Aussen-zur Innenseite verengende, im Querschnitt rechteckige, insbesondere quadratische, Vertiefungen 23, wiederum mit ebenfalls im Querschnitt rechteckigen, insbesondere quadratischen, erweiterten Bodenräumen 24.

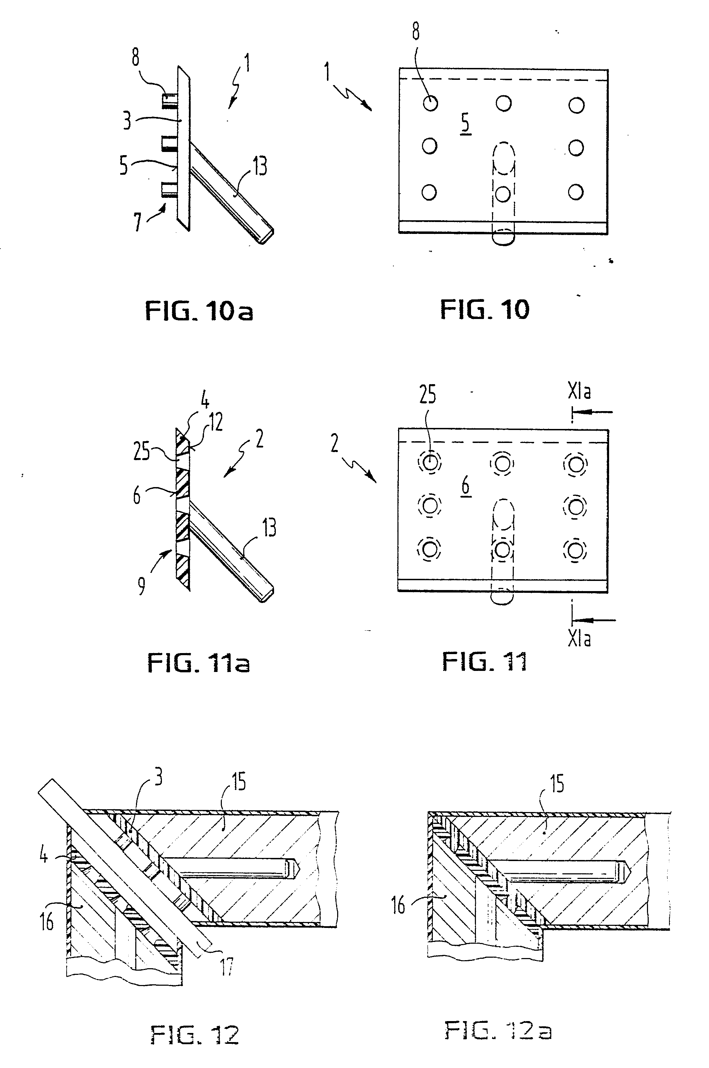

Bei dem weiteren, in den Figuren 10 - 12a dargestellten vierten Ausführungsbeispiel sind die Vorsprünge 7 wie beim ersten Ausführungsbeispiel als zylindrische Zapfen 8 ausgebildet, die Rücksprünge 9 dagegen als trichter - bzw. kegelstumpfförmige Vertiefungen 25, welche sich von der Aussen-zur Innenseite 6 bzw. 12 der Platte 4 erweitern.

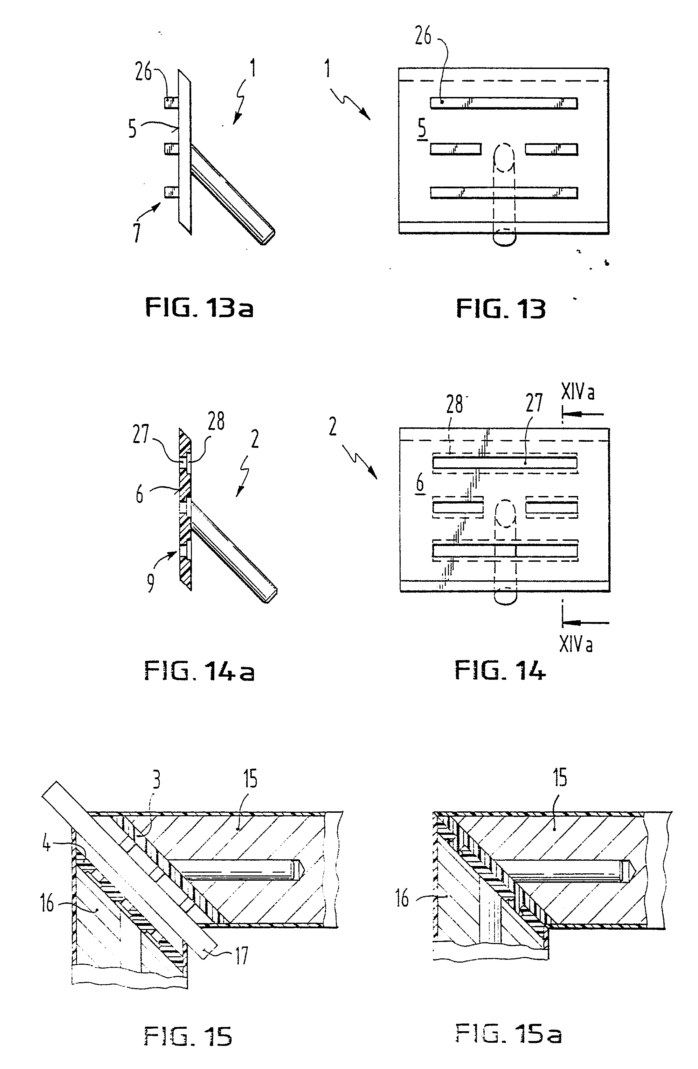

Bei einer fünften und letzten Ausführungsform gemäss Figuren 13 - 15a sind die Vorsprünge 7 auf dem ersten Verbindungs-Zwischenstück 1 als im Längs-und Querschnitt rechteckige Stege 26 ausgebildet, welche sich nahezu über die vollständige Breite der aussenseite 5 des ersten Verbindungs-Zwischenstückes 1 erstrecken, und die Rücksprünge 9 als dazu komplementäre, - schlitzförmige Ausnehmungen 27, wobei deren Bodenraum 28 erweitert ist.

## Ansprüche

1) Verbindungs-Zwischenstücke aus thermoplastischem Kunststoff für die Herstellung von festen Verbindungen zwischen Profilabschnitten, insbesondere Eckverbindungen von Fensterrahmenprofilen, wobei die Profilabschnitte massiv und/oder hohl sind, einen Überzug aus dem gleichen Material wie die Verbindungs-Zwischenstücke aufweisen oder selbst vollständig aus diesem Material bestehen und die Verbindungs-Zwischenstücke als die Stirnflächen der Profilabschnitte vollständig abdekkende, den Konturen und Aussenabmessungen der Profilabschnitte angepasste Platten ausgebildet sind, wobei die Platten auf ihren, den Stirnflächen der Profilabschnitte zugekehrten Innenseiten mindestens einen, in Achsrichtung der Profilabschnitte verlaufenden Zapfen aufweisen, welcher entweder in eine entsprechende Bohrung in der Stirnfläche des Vollprofilabschnittes einsteht, oder als in die offenen Hohlprofilabschnitte einstehendes, den Konturen und Innenabmessungen des Hohlprofilabschnittes angepasstes Kernstück ausgebildet ist und wobei der Kunststoff-Überzug bzw. die selbst aus dem Kunststoffmaterial bestehenden Profile mit einer äusseren Randschicht über die Verbindungs-Zwischenstücke übersteht bzw. überstehen und die Aussenseiten der Platten Profilierungen aufweisen, **dadurch gekennzeichnet,** dass die Aussenseiten (5 bzw. 6) der Verbindungs-Zwischenstücke (1 bzw. 2) als im wesentlichen glatte Flächen ausgebildet sind und die Profilierungen singuläre Vor-und/oder Rücksprünge (7 bzw. 9) sind, wobei diese auf den einander zugekehrten Aussenseiten (5 bzw. 6) der jeweils paarweise angeordneten Verbindungs-Zwischenstücke (1 bzw. 2) zueinander komplementär komplementär sind.

2.) Verbindungs-Zwischenstücke nach Anspruch 1, **dadurch gekennzeichnet,** dass sämtliche Vorsprünge (7) auf dem ersten Verbindungs-Zwischenstück (1) und sämtliche komplementären Rücksprünge (9) in dem zweiten Verbindungs-Zwischenstück (2) angeordnet sind.

3.) Verbindungs-Zwischenstücke nach Anspruch 1, **dadurch gekennzeichnet,** dass die Länge der Vorsprünge (7) grösser als die Tiefe der Rücksprünge (9) ist.

4.) Verbindungs-Zwischenstücke nach Anspruch 1, **dadurch gekennzeichnet,** dass die Vorsprünge (7) und Rücksprünge (9) senkrecht zur Fläche der Aussenseiten (5 bzw. 6) der jeweiligen Verbindungs-Zwischenstücke (1 bzw. 2) gerichtet sind.

5.) Verbindungs-Zwischenstücke nach Anspruch 1, **dadurch gekennzeichnet,** dass die Vorsprünge (7) als zylindrische Zapfen und die Rücksprünge (9) als komplementäre zylindrische Bohrungen (10) mit radial erweiterten Bodenräumen (11) ausgebildet sind.

6.) Verbindungs-Zwischenstücke nach Anspruch 1, **dadurch gekennzeichnet,** dass die Vorsprünge (7) als im Querschnitt rechteckige, insbesondere quadratische, Zapfen (20) und die Rücksprünge (9) als im Querschnitt rechteckige, insbesondere quadratische, Vertiefungen (21) mit erweitertem Bodenraum (22) ausgebildet sind.

7.) Verbindungs-Zwischenstücke nach Anspruch 5, **dadurch gekennzeichnet,** dass die Rücksprünge (9) als trichter-bzw. kegelstumpfförmige Vertiefungen (25) ausgebildet sind, welche sind von der Aussen-zur Innenseite (6 bzw. 12) der Platte (4) erweitern.

8.) Verbindungs-Zwischenstücke nach Anspruch 6, **dadurch gekenn zeichnet,** dass die Rücksprünge (9) als im Längsschnitt trichterförmige, sich von der Aussen-zur Innenseite verengende Vertiefungen (23) mit erweitertem Bodenraum (24) ausgebildet sind.

9.) Verbindungs-Zwischenstücke nach Anspruch 1, **dadurch gekennzeichnet,** dass die Vorsprünge (7) als im Längs-und Querschnitt rechteckige Stege (26) und die Rücksprünge (9) als dazu komplementäre, schlitzförmige Ausnehmungen (27) nach Art von Nut und Feder ausgebildet sind, wobei der Bodenraum (28) der Ausnehmungen (27) erweitert ist.

10.) Verbindungs-Zwischenstücke nach den vorstehenden Ansprüchen, **dadurch gekennzeichent,** dass die Rücksprünge (9) und Ausnehmungen (27) keinen geschlossenen Boden aufweisen, sondern nicht nur zur Aussen-sondern nach Innenseite (5, 6 bzw. 12) der Platten (3 bzw. 4) offene Löcher sind.

11.) Eckverbindung zweier, auf Gehrung geschnittener, jeweils mit einem Überzug aus thermoplastischem Kunststoff versehener Vollprofilabschitte eines Fensterrahmens, bei welcher die gegeneinander gerichteten Stirnflächen der Profilabschnitte jeweils ein ebenfalls aus thermoplastischem Kunststoff bestehendes Verbindungs-Zwischenstück aufweisen, welche als Platten ausgebildet sind, die mit ihren Rändern den Konturen und Abmessungen der Profilabschnitte angepasst sind und auf ihren, den Stirnflächen der Profilabschnitte zugekehrten Innenseiten jeweils mindestens einen Zapfen aufweisen, welcher in eine entsprechende Bohrung in der Stirnfläche des jeweiligen Profilabschnittes einsteht und welche mit ihren profilierten Aussenseiten gegeneinander verschweißt sind, wobei die über die Stirnflächen der Profilabschnitte und die Verbindungs-Zwischenstücke überstehenden Überzüge ebenfalls miteinander verschweisst sind, **dadurch gekennzeichnet,** dass die Profilierungen auf der Aussenseite (5) des ersten Verbindungs-Zwischenstückes (1) als Zapfen (8, 20) oder Stege (26) ausgebildet sind und in auf der Aussenseite (6) des zweiten Verbindungs-Zwischenstückes (2) als komplementäre Bohrungen (10, 21, 23, 25) oder Schlitze (27) ausgebildete Rücksprünge (9) einstehen und die gestauchten Enden der Zapfen (8, 20) oder Stege (26) die erweiterten Bodenräume (11, 22, 24, 28) der Bohrungen (10, 21, 23, 25) und Schlitze (27) ausfüllen.

12). Verfahren zur Herstellung von festen Verbindungen zwischen Abschnitten von Voll-oder Hohlprofilen, welche einen Überzug aus thermoplastischem Kunststoff aufweisen oder selbst vollständig aus diesem Material bestehen, insbesondere von Eckverbindungen von Fensterrahmen nach Anspruch 11, wobei auf den Stirnflächen der gegeneinander gerichteten Profilabschnitte jeweils ein Verbindungs-Zwischenstück angeordnet ist, welche als die Stirnflächen der Profilabschnitte vollständig abdeckende, den Konturen und Abmessungen der Profilabschnitte angepasste und aus dem gleichen Kunststoffmaterial hergestellte Platten ausgebildet sind, wobei die Platten auf ihren, den Stirnflächen der Profilabschnitte zugekehrten Innenseiten mindestens einen, in Achsrichtung der Profilabschnitte verlaufenden Zapfen aufweisen, welcher entweder in eine entsprechende Bohrung in der Stirnfläche des Voll profilabschnittes einsteht oder als in die offenen Hohlprofilabschnitte einstehendes, den Konturen und Innenabmessungen des Hohlprofilabschnittes angepasstes Kernstück ausgebildet ist und wobei der Kunststoff-Überzug bzw. die selbst aus dem Kunststoff bestehenden Profile mit einer äusseren Randschicht über die Verbindungs-Zwischenstücke übersteht bzw. überstehen und die Aussenseiten der Platten Profilierungen aufweisen, **dadurch gekennzeichnet,** dass zwischen die gegeneinander gerichteten Profilabschnitte mit dem auf ihren Stirnflächen angeordneten Verbindungs-Zwischenstücken (1 bzw. 2) eine Heizplatte (17) geführt wird, welche die über die Stirnflächen der Profilabschnitte (15 bzw. 16) bzw. jeweiligen Verbindungs-Zwischenstücke (1 bzw. 2) überstehenden Überzüge (19) bzw. Randschichten sowie die Profilierungen, welche als entsprechend lange Vorsprünge (7) in Form von Zapfen (8, 20) und/oder Stegen (26) auf dem ersten Verbindungs-Zwischenstück (1) ausgebildet sind, und die Aussenseiten (5 bzw. 6) der Platten (3 bzw. 4) der Verbindungs-Zwischenstücke (1 bzw. 2) erwärmt, dass nach ausreichender Erwärmung die Heizplatte (17) entfernt wird und die Profilabschnitte (15 bzw. 16) aufeinander zugeführt werden, wobei die Vorsprünge (7) auf dem ersten Verbindungs-Zwischenstück (1) in die Rücksprünge (2) in dem zweiten Verbindungs-Zwischenstück (2) eingeführt und die Profilabschnitte (15 bzw. 16) so weit gegeneinander gepresst werden, bis die Vorsprünge (7) wegen ihrer grösseren Länge gegenüber der Tiefe der Rücksprünge (9) in diesen gestaucht werden und die erweiterten Bodenräume (11, 22, 24, 28) der Rücksprünge (9) ausfüllen.

13.) Verfahren nach Anspruch 12, **dadurch gekennzeichnet,** dass die Heizplatte (17) in ihrer, der die Vorsprünge (7) aufweisenden Aussenseite (5) des entsprechenden Verbindungs-Zwischenstückes (1) gegenüber liegenden Oberfläche den Vorsprüngen (7) angepasste, komplementäre Profilierungen in Form von Rücksprüngen bzw. Ausnehmungen oder Schlitzen aufweist und dass die Heizplatte (17) entsprechend geführt und/oder von einer bestimmten Seite aus in den Verbindungsspalt geführt wird.

FIG. 1a

FIG. 1

FIG. 2a

FIG. 2

FIG. 3

FIG. 3a

FIG. 4a

FIG. 4

FIG. 5a

FIG. 5

FIG. 6

FIG. 6a

FIG. 7a

FIG. 7

FIG. 8a

FIG. 8

FIG. 9

FIG. 9a

**FIG. 10a**

**FIG. 10**

**FIG. 11a**

**FIG. 11**

**FIG. 12**

**FIG. 12a**

FIG. 13a

FIG. 13

FIG. 14a

FIG. 14

FIG. 15

FIG. 15a

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| X | DE-A-2 042 924 (LANDAU) <br> * Seite 6, Zeile 9 - Seite 12, Zeile 6; Seite 18, Abschnitt 2; Figuren 1-3 * | 1,4 | E 06 B 3/96 |
| Y | | 3,5,11,12 | |
| | --- | | |
| X | DE-B-2 006 813 (ANSCHÜTZ) <br> * Spalte 1, Zeilen 9-33,52-63; Spalte 2, Zeile 4 - Spalte 4, Zeile 26; Figuren 1-11 * | 1,4 | |
| A | | 9,11-13 | |
| | --- | | |
| Y | DE-B-2 714 378 (HARTMANN) <br><br> * Spalte 2, Zeilen 17-44; Spalte 4, Zeilen 17-61; Figuren 3,4 * | 3,5,11,12 | |
| A | | 6,8,9 | |
| | --- | | |
| A | US-A-3 928 100 (HEUSCHEN) <br><br> * Spalte 2, Zeile 47 - Spalte 4, Zeile 3; Figuren 1-4 * | 1,9,11,12 | |
| | --- --/- | | |

**RECHERCHIERTE SACHGEBIETE (Int. Cl.4)**

E 06 B

Der vorliegende Recherchenbericht wurde für alle Patentansprüche erstellt.

| Recherchenort | Abschlußdatum der Recherche | Prüfer |
|---|---|---|
| DEN HAAG | 08-10-1987 | DEPOORTER F. |

**Europäisches Patentamt**

## EUROPÄISCHER RECHERCHENBERICHT

### EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl 4) |
|---|---|---|---|
| A | DE-A-3 320 624 (OSTERMANN & SCHEIWE)<br><br>* Seite 8, Zeile 8 - Seite 11, Zeile 5; Figuren 1,2 * | 1,4,6, 9,11, 12 | |
| A | DE-U-7 144 828 (EBERBACH)<br><br>* Seite 6, Zeile 1 - Seite 8, Zeile 4; Figuren 1-4 * | 1,4,6, 9,11, 12 | |
| A | FR-A-1 379 813 (BOUCHER)<br><br>* Seite 1, Spalte 2, Zeile 8 - Seite 2, Spalte 1, Zeile 5; Figuren 1-5 * | 1,4,5, 11,12 | |
| A | EP-A-0 036 286 (BLACKNELL BUILDINGS)<br>* Seite 4, Zeile 18 - Seite 5, Zeile 31; Figuren 1-8 * | 1,11, 12 | RECHERCHIERTE SACHGEBIETE (Int. Cl.4) |

-----

Der vorliegende Recherchenbericht wurde für alle Patentansprüche erstellt.

| Recherchenort | Abschlußdatum der Recherche | Prüfer |
|---|---|---|
| DEN HAAG | 08-10-1987 | DEPOORTER F. |